# EUROPEAN PATENT APPLICATION

(11) **EP 4 338 833 A1**
(43) Date of publication of application: **20.03.2024**
(21) Application number: 22824926.4
(22) Date of filing: 10.06.2022
(51) Int. Cl.: B01J 23/46, B01D 53/94, B01J 27/224, B01J 35/02, B01J 35/04, F01N 3/18, F01N 3/20, F01N 3/24, F01N 3/28

(54) **EXHAUST GAS PURIFICATION CATALYST**

(30) Priority: 18.06.2021 JP 2021101313
(71) Applicant: CATALER CORPORATION, Kakegawa-shi, Shizuoka 437-1492 (JP)
(72) Inventor: OHASHI, Tatsuya, Kakegawa-shi, Shizuoka 437-1492 (JP); TAKASAKI, Kohei, Kakegawa-shi, Shizuoka 437-1492 (JP); ONOHARA, Yu, Kakegawa-shi, Shizuoka 437-1492 (JP)
(74) Representative: Kramer Barske Schmidtchen Patentanwälte PartG mbB
(86) International application number: PCT/JP2022/023454
(87) International publication number: WO 2022/264936

(57) **Abstract**

The present invention provides an exhaust gas purification catalyst with excellent warm-up characteristics, which can quickly exhibit effective catalytic activity even when exhaust gas in a relatively low temperature range is introduced. In the exhaust gas purification catalyst disclosed herein, a catalyst support portion provided on the base material includes: a catalyst coat portion having a carrier made of inorganic compound particles and at least one catalyst metal in a supported state on the carrier; and a catalyst metal direct support portion having at least one catalyst metal in a directly supported state on the base material without the carrier, the catalyst metal direct support portion is provided in at least an upstream region of a predetermined length from an upstream end in an exhaust gas passage, and the catalyst coat portion is not provided in the upstream region in the exhaust gas passage and is provided only in a downstream region downstream of the upstream region.

## Description

### Technical Field

The present invention relates to an exhaust gas purification catalyst provided in an exhaust system of an internal combustion engine of a vehicle.

The present application is based upon and claims the benefit of priority from Japanese patent application No. 2021-101313 filed on June 18, 2021, and the entire disclosure of which is incorporated herein its entirety by reference.

### Background Art

So-called three-way catalysts (TWCs) are used as exhaust gas purification catalysts to remove exhaust gas components such as hydrocarbons (HC), carbon monoxide (CO), and nitrogen oxides (NOₓ) from exhaust gas exhausted from internal combustion engines such as vehicle engines through oxidation or reduction reaction.

In general, in a three-way catalyst, a catalyst coat layer including a porous support made of an inorganic oxide such as alumina (Al₂O₃) and zirconia (ZrO₂) and a metal (hereinafter also referred to as a "catalyst metal") that is supported on the porous support and functions as an oxidation catalyst and/or a reduction catalyst, such as palladium (Pd) and rhodium (Rh) is formed on a honeycomb base material made of cordierite or the like.

Such three-way catalysts exhibit high catalytic activity under predetermined high temperature conditions. Thus, when the exhaust system is still cold, such as at engine startup, the three-way catalyst in the exhaust system is less active than in the high temperature condition, such as during long-term continuous running by engines. Therefore, there is a need for technology to effectively purify exhaust gas under such conditions.

Especially in recent years, hybrid vehicles and so-called "eco-cars" equipped with idling stop and fuel cutoff functions have become popular. In these vehicles, the engine will be stopped frequently during operation, and the exhaust system is likely to be cold such as at engine startup, even after the start of operation. Therefore, there is a need for technology to effectively purify exhaust gas by a three-way catalyst under such conditions.

As one of the exhaust gas purification catalysts that meet such requirements, known is a so-called electrically heated (also referred to as electric heating type) exhaust gas purification catalyst, also called EHC, which is an exhaust gas purification catalyst including a carrier such as a honeycomb carrier and a catalyst metal supported on the carrier and further including a pair of electrodes and configured to heat the catalyst metal by supplying electric power to the pair of electrodes. For example, Patent Literatures 1 and 2 describe conventional examples of an electrically heated exhaust gas purification catalyst (EHC).

### Citation List

### Patent Literatures

Patent Literature 1: Japanese Patent Application Publication No. 2009-275559
Patent Literature 2: Japanese Patent Application Publication No. 2014-1704

### Summary of Invention

### Technical Problem

EHC requires the installation of electrodes to actively heat the catalyst metal, which increases the installation cost and structural complexity of the exhaust gas purification catalyst, so that an exhaust gas purification catalyst with a simpler configuration that meets the above requirements is desired. Even when EHC is employed, it is desirable to be an EHC with a pipe structure that can quickly demonstrate high exhaust gas purification performance by being able to be heated more effectively than conventional EHC.

The present invention was made to meet such requirements, and provides an exhaust gas purification catalyst with excellent warm-up characteristics that can quickly demonstrate effective catalytic activity even when exhaust gas in a relatively low temperature range, such as when starting an engine, is introduced.

### Solution to Problem

The present inventors have studied a heat capacity of the entire exhaust gas purification catalyst and a relationship between catalytic activity and an exhaust gas temperature introduced, found a configuration in which by setting the heat capacity of an upstream region (also referred to as a front (Fr) region) in the exhaust gas flowing direction to be smaller than the heat capacity of the downstream region (rear (Rr) region), a warm-up performance of the upstream region can be improved, and a sufficient exhaust gas purification performance can be achieved in the downstream region, and completed the present invention.

According to the technology disclosed herein, provided is an exhaust gas purification catalyst for purifying exhaust gas exhausted from an internal combustion engine, including:
a base material disposed in an exhaust pipe of the internal combustion engine and having an exhaust gas passage extending from an upstream end from which the exhaust gas is introduced to a downstream end from which the exhaust gas is exhausted;
a catalyst support portion containing a catalyst metal that functions as a catalyst capable of oxidizing or reducing at least one exhaust gas component and provided in the exhaust gas passage of the base material, wherein the catalyst support portion includes: a catalyst coat portion having a carrier made of inorganic compound particles and at least one catalyst metal in a supported state on the carrier; and a catalyst metal direct support portion that does not contain the carrier and has at least one catalyst metal in a directly supported state on the base material, the catalyst metal direct support portion is provided at least in an upstream region of a predetermined length from the upstream end in the exhaust gas passage, and the catalyst coat portion is not provided in the upstream region of the predetermined length from the upstream end in the exhaust gas passage and is provided in a region downstream of the upstream region.
Here, the "exhaust gas passage" refers to a region where the exhaust gas introduced into the exhaust gas purification catalyst can flow, and is not limited to a space (cell) provided inside the base material. The inside (insides of the pores) of the porous material that constitutes the base material also constitutes part of the exhaust gas passage as long as exhaust gas is introduced and can flow.

As described above, in the exhaust gas purification catalyst, the catalyst coat portion and the catalyst metal direct support portion constitute the catalyst support portion provided in the exhaust gas passage of the base material, the catalyst metal direct support portion is provided in the upstream region of a predetermined length from the upstream end, and the catalyst coat portion is not provided in the upstream region of the predetermined length from the upstream end in the exhaust gas passage and is provided only in a region downstream of the upstream region. In other words, the catalyst support portion, which is the upstream region of the predetermined length does not contain a carrier made of inorganic compound particles, and the heat capacity thus can be reduced by that amount.

Thus, according to the exhaust gas purification catalyst disclosed herein, the temperature rise performance is enhanced in the upstream region of the predetermined length from the upstream end (i.e., in a Fr region provided as the catalyst support portion only in the catalyst metal direct support portion), and purification efficiency of the exhaust gas during so-called cold start and cold run in a relatively low temperature range, such as when an internal combustion engine is started up, can be achieved. Further, the catalyst coat portion is provided in the downstream region downstream of the upstream portion. Thus, a sufficient exhaust gas purification performance can be maintained during hot run.

In a preferred aspect of the exhaust gas purification catalyst disclosed herein, the catalyst metal direct support portion is provided in a region of a length that is at least 30% or more of a total length of the exhaust gas passage from the upstream end.

According to the exhaust gas purification catalyst with such a configuration, the temperature rise performance in the Fr region is further enhanced, and the purification efficiency of exhaust gas during cold start and cold run of the internal combustion engine can be further improved.

In another preferred aspect of the exhaust gas purification catalyst disclosed herein, the catalyst metal direct support portion is provided only in the upstream region of the predetermined length from the upstream end, and is not provided in the downstream region which is downstream of the upstream region and in which the catalyst coat portion is provided.

With such a configuration, the heat capacity of the upstream region can be suitably small. Thus, the purification efficiency of the exhaust gas during cold start and cold run of the internal combustion engine can be further optimized.

In another preferred aspect of the exhaust gas purification catalyst disclosed herein, the catalyst metal direct support portion is provided also in at least a partial region of the downstream region in which the catalyst coat portion is provided.

According to the exhaust gas purification catalyst with such a configuration, the catalyst coat portion and the catalyst metal direct support portion both constitute the catalyst support portion in the downstream region. Thus, for example, the exhaust gas purification performance during hot run can be further optimized.

In another preferred aspect of the plug attachment device disclosed herein, the catalyst metal direct support portion contains, as a catalyst metal, palladium and/or platinum, and the catalyst coat portion contains, as the catalyst metal, rhodium.

The exhaust gas purification catalyst with such a configuration can further optimize purification of exhaust gas during cold start and cold run, especially exhaust gas components that can be purified by oxidation, such as hydrocarbon (HC) and carbon monoxide (CO), in the catalyst metal direct support portion in the upstream region.

In another preferred aspect of the plug attachment device disclosed herein, the base material is made of a material that is heatable by energization, so that the exhaust gas purification catalyst is constituted as an electrically heated catalyst.

As described above, the exhaust gas purification catalyst disclosed herein can improve a temperature rise performance (warm-up performance) by reducing the heat capacity of the upstream region. Such performance is the basic performance conventionally required of the electrically heated exhaust gas purification catalyst (EHC).

Accordingly, by employing the exhaust gas purification catalyst disclosed herein to construct EHC, it is possible to provide an EHC with more improved temperature rise performance (warm-up performance, warm-up characteristics) than before.

### Brief Description of Drawings

[Fig. 1] Fig. 1 is a schematic perspective view of an example of an exhaust gas purification catalyst that constitutes a three-way catalyst.
[Fig. 2] Fig. 2 is a schematic perspective view of an example of an exhaust gas purification catalyst that constitutes an electrically heated exhaust gas purification catalyst (EHC).
[Fig. 3] Fig. 3 is a schematic view of a configuration of an embodiment of an exhaust gas purification catalyst disclosed herein.
[Fig. 4] Fig. 4 is a schematic view of a configuration of an embodiment of an exhaust gas purification catalyst disclosed herein.
[Fig. 5] Fig. 5 is a schematic view of a configuration of an embodiment of an exhaust gas purification catalyst.
[Fig. 6] Fig. 6 is a schematic view of a configuration of another embodiment of an exhaust gas purification catalyst.
[Fig. 7] Fig. 7 is a graph showing a warm-up performance (warm-up characteristics) in terms of HC purification rate for four exhaust gas purification catalysts constructed using a Si-SiC base material.
[Fig. 8] Fig. 8 is a graph showing a warm-up performance (warm-up characteristics) in terms of HC purification rate for two exhaust gas purification catalysts constructed using a cordierite base material.
[Fig. 9] Fig. 9 is a graph showing a warm-up performance (warm-up characteristics) in terms of HC purification rate for two exhaust gas purification catalysts constructed using a metal base material.

### Description of Embodiments

Some preferred embodiments of the exhaust gas purification catalyst disclosed herein will be described below with reference to the accompanying drawings. The matters necessary for executing the present technology, except for matters specifically herein referred to can be grasped as design matters of those skilled in the art based on the related art in the preset field. The present technology can be executed based on the contents disclosed herein and the technical knowledge in the present field. The expression "A to B" indicating herein a numerical range means from A or more to B or less inclusive.

The exhaust gas purification catalyst disclosed herein is characterized in that a catalyst coat portion and a catalyst metal direct support portion constitute a catalyst support portion, the catalyst metal direct support portion is provided at least in an upstream region of a predetermined length from an upstream end in an exhaust gas passage, and the catalyst coat portion is not provided in the upstream region and is provided only in a downstream region downstream of the upstream region. The other configurations are not particularly limited. The exhaust gas purification catalyst disclosed herein can be used in exhaust pipes connected to various internal combustion engines, in particular to internal combustion engines of gasoline engines and diesel engines in automobiles (in this case, an automobile gasoline engine) 1 by appropriately selecting the base material to be described later, the carrier in the catalyst coat portion (including the case where the carrier is an OSC material), the catalyst metals to be supported in the catalyst metal direct support portion and the catalyst coat portion, and the like and forming them into desired shapes according to the intended use.

### <Base Material>

The base material is a member that constitutes a framework of the exhaust gas purification catalyst. As the base material, various materials in various forms that have been used as base materials that constitute the exhaust gas purification catalyst can be employed. For example, ceramic base materials such as cordierite, aluminum titanate, and silicon carbide (SiC) with high heat resistance, or metal base materials such as stainless steel can be used.

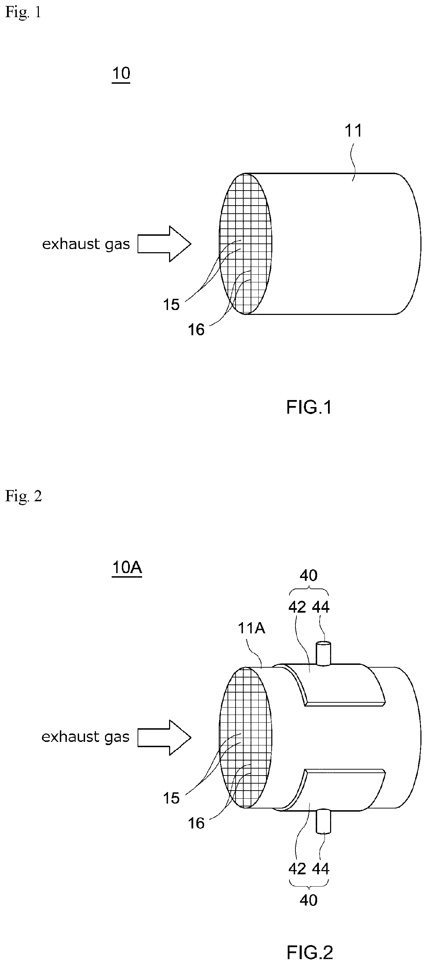

The shape can be the same as those of the conventional exhaust gas purification catalysts. As an example, a base material 11 of an exhaust gas purification catalyst 10 shown in Fig. 1 is a base material 11 with a honeycomb structure made of cordierite, for example, whose external shape is cylindrical, the base material 11 has multiple cells 15, which are through holes, as an exhaust gas passage, in its major axis direction, and the exhaust gas can contact partitions (rib walls) 16 that divides the respective cells 15. Alternatively, it may be a sponge-like porous material with irregular pores, as long as the exhaust gas can flow through the pores.

The base material 11 is not limited to a so-called straight flow type in which exhaust gas introduced from an upstream side in the exhaust gas flowing direction (see an arrow in Fig. 1), i.e., an upstream end from which the exhaust gas is introduced directly passes through the cells 15 and exhausted from a downstream end on a downstream side in the exhaust gas flowing direction. The base material 11 may be, for example, a so-called wall through type base material in which exhaust gas introduced from the upstream end of the cells in which the upstream ends are only open passes through a porous partition, moves to adj acent cells in which the downstream ends are only open, and exhausted from the downstream ends of the cells.

Although not particularly limited thereto, the capacity of the base material 11 (volume of cells 15) is usually 0.1 L or more (preferably 0.5 Lor more), for example, 5 Lorless (preferably 3 L or less, more preferably 2 L or less). The overall length of the base material 11 along the exhaust gas flowing direction is usually about 10 mm to about 500 mm (e.g., 50 mm to 300 mm). The shape of the base material 11 can be a foam shape, a pellet shape in addition to a honeycomb shape. As for the outside shape of the entire base material 11, an elliptical cylindrical shape, a polygonal cylindrical shape, and the like may be employed instead of a cylindrical shape.

The exhaust gas purification catalyst disclosed herein can be used suitably as an electrically heated exhaust gas purification catalyst. Fig. 2 shows an example of an exhaust gas purification catalyst 10A used as an EHC. The shape of the base material 11A is not particularly limited and may be the same as that shown in Fig. 1.

The base material 11A can be heated by energization, but silicon carbide (SiC), a composite material (Si-SiC) of silicon carbide (SiC) and silicon (Si), a composite material of silicon carbide (SiC) and molybdenum disilicide (MoSi₂), and the like are suitable as ceramic materials that constitute the base material that can be heated well by energization.

Alternatively, alloy materials such as Ni-Cr and Fe-Cr-Al are also suitable as metal materials that constitute the base material that can be well heated by energization.

The electrically heated catalyst (EHC) 10A according to the present embodiment includes a pair of electrodes 40 facing each other across the base material 11A, as shown in Fig. 2. The electrode 40 includes an electrode layer 42 provided on the outer surface of the base material 11A and an electrode terminal 44. The electrode layer 42 functions to diffuse electric current to the surface of the base material 11A so that it can efficiently generate heat. The outside shape and size of the electrode layer 42 may be set as appropriate. When such a pair of electrodes 40 is provided, there is no need to provide another heating element. Thus, the electrically heated exhaust gas purification catalyst (EHC) 10A can be efficiently installed.

### <Catalyst Support Portion>

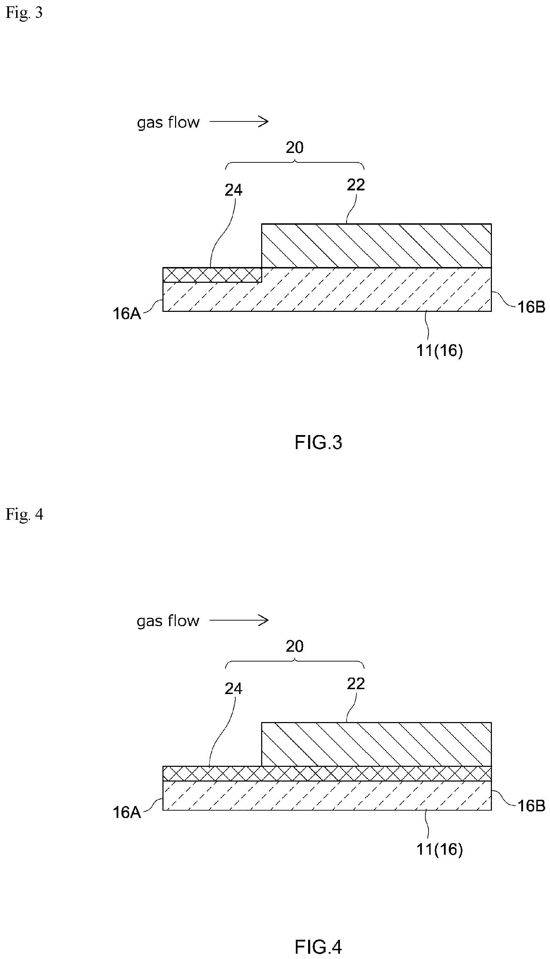

A catalyst support portion 10, 10A includes a catalyst support portion 20 provided on the surface and/or inside of each partition 16 in the cell 15, which is an exhaust gas passage. As shown in Fig. 3, in the exhaust gas purification catalyst disclosed herein, the catalyst support portion 20 includes: a catalyst metal direct support portion 24 provided in at least the upstream region of a predetermined length from an upstream end 16A; and a catalyst coat portion 22 that is not provided in the upstream region of the predetermined length and is provided only in a downstream region downstream of the upstream region.

In Fig. 3 and Figs. 4 to 6 to be described later, the exhaust gas flows from the left side to the right side (see arrows in the drawings). Thus, the left end of the base material 11 (partitions 16) in the drawings is the upstream end 16A and the right end is the downstream end 16B.

As shown in Fig. 3, in one embodiment, the catalyst metal direct support portion 24 is provided only in the upstream region of the predetermined length from the upstream end 16A. Alternatively, in another embodiment shown in Fig. 4, the catalyst metal direct support portion 24 is provided also in at least a partial area of the downstream region in which the catalyst coat portion 22 is provided (an entire region from the upstream end 16A to the downstream end 16B in the embodiment shown in Fig. 4). However, in both embodiments, the catalyst coat portion 22 is not provided in the upstream region of the predetermined length, and is provided only in the downstream region downstream of the upstream region.

Therefore, in both the embodiments shown in Figs. 3 and 4, compared to the case where the catalyst coat portion 22 is provided in the entire region from the upstream end 16A to the downstream end 16B, the heat capacity of the catalyst support portion 20 in the upstream region decreases, thereby improving the warm-up performance. In other words, the temperature rise performance of the catalyst metal direct support portion in the upstream region improves, and the purifying performance of the exhaust gas during cold start and cold run can be further enhanced. In light of this fact, the embodiment shown in Fig. 3 which has smaller thermal capacity is preferable.

On the other hand, considering the purifying performance of the entire exhaust gas purification catalyst, an embodiment in which the catalyst coat portion and the catalyst metal direct support portion are both provided in the downstream region such as shown in Fig. 4 is preferable.

The catalyst coat portion 22 at least includes a catalyst metal that functions as a catalyst capable of oxidizing or reducing at least one exhaust gas component and an inorganic carrier that supports the catalyst metal.

Examples of the catalyst metal include metals belonging to platinum group elements such as palladium (Pd), rhodium (Rh), and platinum (Pt) or other metals that function as oxidization catalysts or reduction catalysts. Pd and Pt have excellent purifying performance (oxidation purifying performance) for carbon monoxide and hydrocarbon, and Rh has excellent purifying performance (reduction purifying performance) for NOₓ. Thus, they are particularly preferable catalyst metals. In addition to these, metals such as barium (Ba), strontium (Sr), other alkaline earth metals, alkali metals, transition metals, and the like may be used as cocatalyst components. The mean particle diameter of the catalyst metal by electron microscopy may be preferably 0.5 nm to 50 nm, more preferably 1 nm to 20 nm, but is not particularly limited.

The carrier that supports the catalyst metal and constitutes the catalyst coat portion 22 is not particularly limited as long as it can support the catalyst metal, and can be a support made of known inorganic compound particles. Examples of the carrier include inorganic compound particles (so-called an OSC material) having oxygen storage capacity (OSC) such as ceria (CeO₂) and a composite oxide (e.g., a ceria-zirconia composite oxide (CZ or ZC composite oxide)) containing ceria; and oxide particles such as alumina (Al₂O₃), titania (TiO₂), zirconia (ZrO₂), and silica (SiO₂). The carriers may be used alone or in combination of two or more of them. The OSC material may function as a cocatalyst for purification of exhaust gas, and thus, a carrier containing the OSC material is preferable. For example, the OSC materials such as ceria and a ceria-zirconia composite oxide, containing trace amounts of oxides that contains yttrium (Y), lanthanum (La), niobium (Nb), praseodymium (Pr), and other rare earth elements are suitable because they improve heat resistance.

The catalyst coat portion 22 may further contain components other than the catalyst metal components and the carrier, such as a binder, a cocatalyst component, and other additives.

As the binder, alumina, silica, and the like can be used as in known catalyst coat portion of this type. Examples of the cocatalyst component include metals such as Ba and Sr as described above.

The content of the catalyst metal in the catalyst coat portion 22 is not particularly limited. For example, the content may be 0.01 mass% to 10 mass%, preferably 0.1 mass% to 5 mass% relative to the entire mass of the carrier contained in the catalyst coat portion 22.

The catalyst coat portion 22 may have a simple monolayer structure, as schematically shown in Figs. 3 and 4, or a multilayer structure with two or more layers in which types of catalyst metals and/or carriers, their blending ratios, and the like are different from each other. The thickness and length of the catalyst coat portion 22 may be determined, as appropriate, according to the size of the cells 15 of the base material 11, 11A, the flow rate of the exhaust gas introduced into the exhaust gas passage, and the like. For example, the thickness of the catalyst coat portion 22 can be 1 µm to 500 µm.

The catalyst metal direct support portion 24 is part of the catalyst support portion, which is configured to be directly supported on the base material 11, 11A without using the carrier to reduce the heat capacity compared to the catalyst coat portion 22.

The type of the catalyst metal used in the catalyst metal direct support portion 24 may be the same as or different from that in the catalyst coat portion 22. For example, when the three-way catalyst is constituted, at least one of Pd, Pt, or Rh such as used in Examples described below is preferably supported on the catalyst metal direct support portion 24. For example, when Pd and/or Pt is supported as the catalyst metal, the purifying performance of exhaust gas during cold start and cold run, especially the purifying performance of the exhaust gas components purified by oxidation, such as HC and CO, can be improved. On the other hand, for example, when Rh is supported as the catalyst metal, the purifying performance of the exhaust gas components purified by reduction, such as NOₓ during cold start and cold run can be improved.

Components other than catalytic metals can be contained as long as the desired low heat capacity is maintained. For example, in the case of a catalyst metal direct support portion 24 containing Pd, as used in Examples described below, alkaline earth metals such as barium (Ba) and strontium (Sr) can be contained (for example, in about 1 mass% to about 20 mass% relative to the entire catalyst support portion 20). This can reduce sintering of Pd and maintain catalytic activity of Pd.

The mean particle diameter of the catalyst metal by electron microscopy may be preferably 0.5 nm to 50 nm, more preferably 1 nm to 20 nm, but is not particularly limited.

Although not particularly limited, the content of the catalyst metal per unit volume (1 L) in the entire exhaust gas purification catalyst 10, 10A is suitably about 0.1 g/L to about 5 g/L, preferably about 0.2 g/L to about 2 g/L. When the content of the catalyst metal is too high, it is not desirable in terms of cost, and when the content of the catalyst metal is too low, the exhaust gas purifying performance is not desirable.

When the 1 L is referred to as a catalyst volume herein, it refers to a bulk volume of 1 L, which includes the net volume of the base material 11, 11A plus the volume of the voids in the cells 15.

The catalyst coat portion 22 and the catalyst metal direct support portion 24 in the exhaust gas purification catalyst 10, 10A disclosed herein can be formed by the same method of forming the catalyst coat portion of the conventional exhaust gas purification catalyst.

The catalyst coat portion 22 can be easily produced by the washcoat method or other methods conventionally used to form this type of the catalyst coat portion. For example, an aqueous slurry containing a raw material compound (e.g., water-soluble metal salt such as Pd nitrate or Rh nitrate) that produces catalyst metal particles after firing, carrier particles made of ceramics such as alumina, zirconia, and OSC materials, a cocatalyst component such as barium sulfate, and an additive such as a thickener is coated from the downstream end 16B of the base material 11, 11A by the well-known washcoat method or the like.

Thereafter, the aqueous slurry is fired at a predetermined temperature for a predetermined time. Thus, the catalyst coat portion 22 can be formed on the base material 11, 11A. The firing conditions of the washcoated slurry vary according to the shape and size of the base material or carrier, and typically, an intended catalyst coat portion 22 can be formed by firing at about 400°C to about 1000°C for about 1 hour to about 5 hours.

The catalyst metal direct support portion 24 can also be formed by the washcoat method in the same manner as forming the catalyst coat portion 22. For example, an aqueous slurry containing a raw material compound (e.g., a water-soluble metal salt such as Pd nitrate or Rh nitrate) that produces catalyst metal particles after firing and an additive such as a thickener is coated from the upstream end 16A of the base material 11, 11A by the well-known washcoat method or the like. The thickness of the catalyst metal direct support portion 24 formed in the direction of the thickness of the partitions 16 of the base material 11, 11A can be adjusted by appropriately adjusting the viscosity of the slurry used. For example, it is preferred that the viscosity measured with a commercially available cone-plate viscometer at a rotation speed of 1 rpm to 100 rpm, room temperature (25°C), and shear rate of 380 s⁻¹ is suitably about 10 mPa to about 1000 mPa, preferably about 100 mPa to about 800 mPa. When the catalyst metal is unevenly distributed in the surface portion of the partition 16 (e.g., the surface portion of about 20% to about 30% from the surface of the partition when the total thickness of the partition is 100%), the viscosity is preferably about 200 mPa to about 600 mPa.

As a thickener to adjust the viscosity of this type of slurry for washcoat, a conventionally known compound can be used. Examples of the thickener used include: water-soluble polymers such as polyvinyl alcohol, ethylene glycol, and propylene glycol, cellulose derivatives such as hydroxyethyl cellulose, carboxymethyl cellulose, and methyl cellulose, and polysaccharides such as pectin and xanthan gum.

Thereafter, the aqueous slurry is fired at a predetermined temperature for a predetermined time. Thus, the catalyst metal direct support portion 24 can be formed on the base material 11, 11A. The firing conditions of the washcoated slurry vary according to the shape and size of the base material or carrier, and typically, an intended catalyst metal direct support portion 24 can be formed by firing at about 400°C to about 1000°C for about 1 hour to about 5 hours.

Alternatively, it can be wash-coated with the slurry for forming the catalyst metal direct support portion and wash-coated with the slurry for forming the catalyst coat portion, and then fired at the same time.

In the exhaust gas purification catalyst disclosed herein, the upstream region of the predetermined length (i.e., an area in which the catalyst coat portion 22 is not provided) is not particularly limited in length as long as the intended decrease in heat capacity is achieved. In light of improving the purification efficiency of exhaust gas during cold start and cold run, the upstream region is provided in a region of a length which is suitably 20% or more, preferably 30% or more when the overall length of the cell 15 (exhaust gas passage) of the base material 11, 11Ais 100%. In light of achieving sufficient exhaust gas purification performance during hot run together with the exhaust gas purification performance during cold run, the length of the upstream region is suitably 50% or less, preferably 40% or less of the overall length.

Some Examples of the exhaust gas purification catalyst disclosed herein will be described, but they are not intended to limit the present invention to specific examples.

### <Production Example>

As base materials, the following three types of honeycomb cylindrical, straight flow type base materials 1 to 3 were prepared. Each of the base materials had a length in the major axis direction (exhaust gas flowing direction) of 50 mm, a capacity of 0.551 L, a diameter of 118.4 mm, and about 600 cells with a square cross section. The thickness of the partition was about 4 mils to about 5 mils (1 mil is 1/1000 inch).
· Base material 1: Si-Sic base material
· Base material 2: cordierite base material
· Base material 3: high Al-containing ferrite (20Co-5Al) stainless steel base material

Then, a honeycomb-shaped straight-flow type exhaust gas purification catalyst including a catalyst support portion 20, shown schematically in any of Figs. 3 to 6, was produced using the base material. The specific method is as follows.

### <Comparative Example 1>

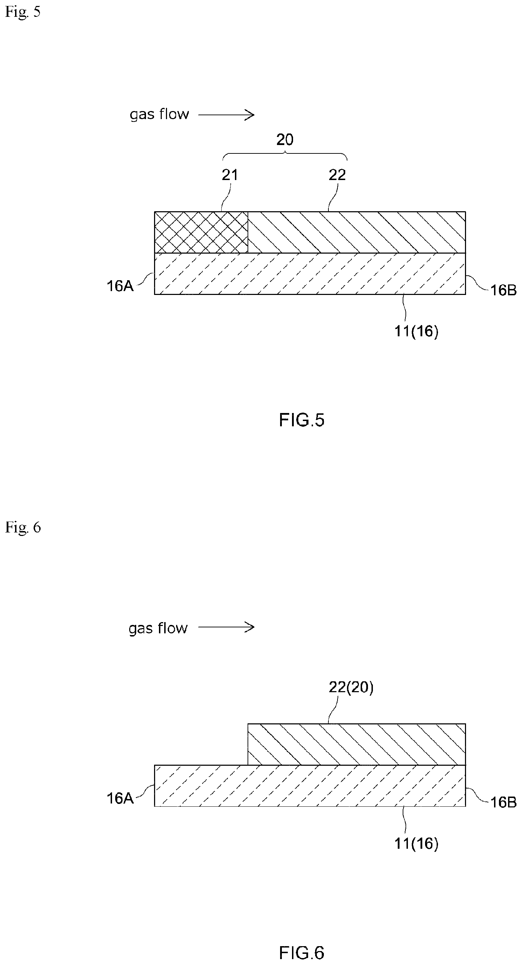

By using the base material 1, a Fr region catalyst coat portion 21 was formed as an upstream region of a length which is 30% from an upstream end relative to 100% of the overall length in the exhaust gas flowing direction (the direction shown by the arrow in the drawing), an Rr region catalyst coat portion 22 was formed in a downstream region of a length which is the remaining 70%, and a catalyst metal direct support portion was not formed. Thus, an exhaust gas purification catalyst of Comparative Example 1 was produced (see Fig. 5).

Specifically, alumina carrier particles containing about 1 wt% to about 10wt% La₂O₃ and alumina-based sol (binder) were added to and suspended in an aqueous solution of palladium nitrate. Thus, a slurry 1 for forming a catalyst coat portion was prepared.

The slurry 1 was then poured into the cells from the upstream end of the base material 1, and unnecessary substances were blown away with a blower. Thus, a Pd layer containing Pd as a catalyst metal was formed on the wall surface (partition surface) of the base material. The resultant was then dried in a dryer set at 120°C for two hours to remove moisture, and then transferred to an electric furnace and fired at 500°C for two hours. Thus, a Fr region catalyst coat portion 21 containing Pd was formed in the upstream region of a length which was 30% from the upstream end relative to 100% of the overall length.

Then, alumina carrier particles containing about 1 wt% to about 10 wt% La₂O₃, CZ compound particles containing CeO₂ as an OSC material in a content of 15 wt% to 40 wt% and the reminder ZrO₂, and alumina-based sol (binder) were added to and suspended in an aqueous solution of rhodium nitrate. Thus, a slurry 2 for forming a catalyst coat portion was prepared.

The slurry 2 was then poured into the cells from the downstream end of the base material 1, and unnecessary substances were blown away with a blower. Thus, a Rh layer containing Rh as a catalyst metal was formed on the wall surface (partition surface) of the base material. The resultant was then dried in a dryer set at 120°C for two hours to remove moisture, and then transferred to an electric furnace and fired at 500°C for two hours. Thus, an Rr region catalyst coat portion 22 containing Rh was formed in the downstream region of a length which was 70% from the downstream end relative to 100% of the overall length (see Fig. 5). For the amount of the catalyst metal supported per 1 L of the catalyst volume in Comparative Example 1, the amount of Pd supported in the Fr region catalyst coat portion 21 was about 2 g/L, and the amount of Rh supported in the Rr region catalyst coat portion 22 was about 0.15 g/L.

### <Comparative Example 2>

Alumina carrier particles containing about 1 wt% to about 10 wt% La₂O₃, CZ compound particles containing CeO₂ as an OSC material in a content of 15 wt% to 40 wt% and the reminder ZrO₂, and alumina-based sol (binder) were added to and suspended in an aqueous solution containing palladium nitrate and rhodium nitrate. Thus, a slurry 3 for forming a catalyst coat portion was prepared.

The slurry 3 was then poured into the cells from the downstream end of the base material 1, and unnecessary substances were blown away with a blower. Thus, a Pd-Rh layer containing Pd and Rh as catalyst metals was formed on the wall surface (partition surface) of the base material. The resultant was then dried in a dryer set at 120°C for two hours to remove moisture, and then transferred to an electric furnace and fired at 500°C for two hours. Thus, an Rr region catalyst coat portion 22 containing both Pd and Rh was formed in the downstream region of a length which was 70% from the downstream end relative to 100% of the overall length (see Fig. 6). In this Comparative Example 2, a catalyst support portion was not formed in the upstream region of a length which was 30% from the upstream end relative to 100% of the overall length in the exhaust gas flowing direction. In the Rr region catalyst coat portion 22 per 1 L of the volume of the catalyst in this Comparative Example 2, the amount of Pd supported is about 2 g/L, and the amount of Rh supported is about 0.15 g/L.

### <Example 1>

Hydroxyethyl cellulose was added as a thickener to an aqueous solution of palladium nitrate to prepare a coating solution for forming a catalyst metal direct support portion. The amount of the thickener added was adjusted to have a viscosity of 300 mPa, measured at a shear velocity of 380 s⁻¹ at 25°C by using a cone-plate viscometer manufactured by Toki Sangyo Co., Ltd. when the number of revolutions is changed in the range of 1 rpm to 100 rpm.

The coating solution obtained was poured into an upstream region of a length which was 30% from the upstream end relative to 100% of the overall length of the inside of each cell from the upstream end of the base material 1, and unnecessary substances were blown away with a blower. Thus, a region in which Pd was directly disposed was formed inside the partition of the base material (a region of a depth which was about 30% from the surface of the partition relative to 100% of the overall thickness). The resultant was then dried in a dryer set at 120°C for two hours to remove moisture, and then transferred to an electric furnace and fired at 500°C for two hours. Thus, a catalyst metal direct support portion 24 containing Pd in an upstream region of a length which was 30% from the upstream end relative to 100% of the overall length was formed (see Fig. 3).

Then, the same process as in Comparative Example 1 was performed using the slurry 2, and an Rr region catalyst coat portion 22 containing Rh was formed in the downstream region of a length which was 70% from the downstream end relative to 100% of the overall length (see Fig. 3). For the amount of the catalyst metal supported per 1 L of the catalyst volume in Example 1, the amount of Pd supported in the catalyst metal direct support portion 24, which was the Fr region, was about 2 g/L, and the amount of Rh supported in the Rr region catalyst coat portion 22 was about 0.15 g/L.

### <Example 2>

A coating solution for forming the catalyst metal direct support portion was poured over the entire length from the upstream end to the lower end inside each cell, and unnecessary substances were blown away with a blower. Thus, a region in which Pd was directly disposed was formed inside the partition of the base material (a region of a depth which was about 30% from the surface of the partition relative to 100% of the overall thickness). The resultant was then dried in a dryer set at 120°C for two hours to remove moisture, and then transferred to an electric furnace and fired at 500°C for two hours. Thus, a catalyst metal direct support portion 24 containing Pd was formed over the overall length of each cell (see Fig. 4).

Thus, the same process as in Comparative Example 1 and Example 1 was performed using the slurry 2, and an Rr region catalyst coat portion 22 containing Rh was formed in the downstream region of a length which was 70% from the downstream end relative to 100% of the overall length (see Fig. 4). For the amount of the catalyst metal supported per 1 L of the catalyst volume in Example 2, the amount of Pd supported in the catalyst metal direct support portion 24 was about 2 g/L, and the amount of Rh supported in the Rr region catalyst coat portion 22 was about 0.15 g/L.

### <Comparative Example 3>

In Comparative Example 3, the base material 2 was used. By performing the same process using the same materials as in Comparative Example 1, an exhaust gas purification catalyst in which a Fr region catalyst coat portion 21 containing Pd was formed in an upstream region of a length which was 30% from the upstream end relative to 100% of the overall length, and a Rh region catalyst coat portion 22 containing Rh was formed in a downstream region of a length which was 70% from the upstream end was prepared (Fig. 5). For the amount of the catalyst metal supported per 1 L of the catalyst volume in Comparative Example 3, the amount of Pd supported in the Fr region catalyst coat portion 21 was about 2 g/L, and the amount of Rh supported in the Rr region catalyst coat portion 22 was about 0.15 g/L.

### <Example 3>

In Example 3, the base material 2 was used. By performing the same process using the same materials as in Example 1, an exhaust gas purification catalyst in which a catalyst metal direct support portion 24 containing Pd was formed in an upstream region of a length which was 30% from the upstream end relative to 100% of the overall length, and an Rr region catalyst coat portion 22 containing Rh was formed in a downstream region of a length which was 70% from the upstream end was prepared (Fig. 3). For the amount of the catalyst metal supported per 1 L of the catalyst volume in Example 3, the amount of Pd supported in the catalyst metal direct support portion 24, which was the Fr region, was about 2 g/L, and the amount of Rh supported in the Rr region catalyst coat portion 22 was about 0.15 g/L.

### <Comparative Example 4>

In Comparative Example 4, the base material 3 was used. By performing the same process using the same materials as in Comparative Example 1 an exhaust gas purification catalyst in which a Fr region catalyst coat portion 21 containing Pd was formed in an upstream region of a length which was 30% from the upstream end relative to 100% of the overall length, and an Rr region catalyst coat portion 22 containing Rh was formed in a downstream region of a length which was 70% from the upstream end was prepared (Fig. 5). For the amount of the catalyst metal supported per 1 L of the catalyst volume in Comparative Example 4, the amount of Pd supported in the Fr region catalyst coat portion 21 was about 2 g/L, and the amount of Rh supported in the Rr region catalyst coat portion 22 was about 0.15 g/L.

### <Example 4>

In Example 4, the base material 3 was used. By performing the same process using the same materials as in Example 1, an exhaust gas purification catalyst in which a catalyst metal direct support portion 24 containing Pd was formed in an upstream region of a length which was 30% from the upstream end relative to 100% of the overall length, and an Rr region catalyst coat portion 22 containing Rh was formed in a downstream region of a length which was 70% from the upstream end was prepared (Fig. 3). For the amount of the catalyst metal supported per 1 L of the catalyst volume in Example 4, the amount of Pd supported in the catalyst metal direct support portion 24, which was the Fr region, was about 2 g/L, and the amount of Rh supported in the Rr region catalyst coat portion 22 was about 0.15 g/L.

### <Warm-Up Characteristic Evaluation Test>

A warm-up characteristic evaluation test was performed using eight types of exhaust gas purification catalysts obtained.

Specifically, one of the exhaust gas purification catalysts was connected to an exhaust system (exhaust pipe) of a gasoline engine (inline four-cylinder engine) installed on a test stand. In the exhaust system, a bypass pipe to which the exhaust gas purification catalyst was not connected was provided in parallel with the exhaust gas purification catalyst, so that the exhaust gas exhausted from the gasoline engine was switchable to flow toward the exhaust gas purification catalyst or toward the bypass pipe by switching a valve.

The temperature of the exhaust gas introduced into the exhaust gas purification catalyst was then adjusted to achieve the predetermined conditions. In this evaluation test, the air-fuel ratio was set to stoichiometric (here 14.6), exhaust gas was produced at an intake air volume of 22 g/sec, and exhaust gas at about 520°C was introduced into the exhaust gas purification catalyst connected to the exhaust system for preheat treatment.

The valve was then switched and the exhaust gas was exhausted through the bypass pipe and cooling air was introduced into the exhaust gas purification catalyst and cooled until the temperature of the air passing through the catalyst reached about 60°C.

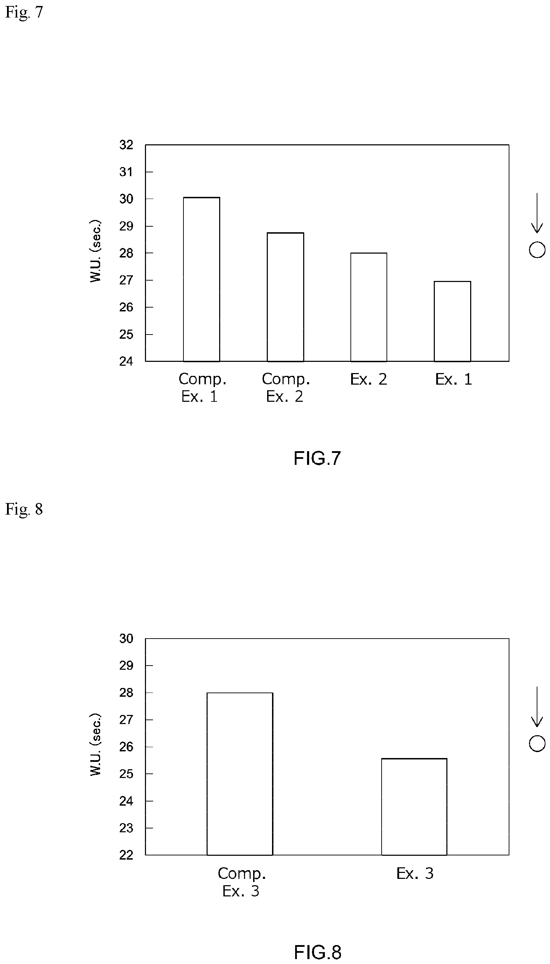

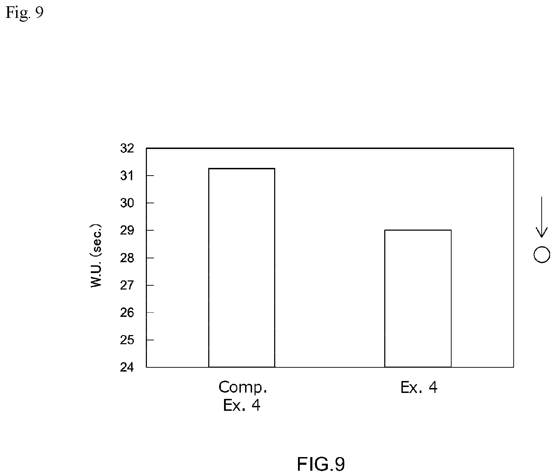

The valve was then switched again, and when the temperature of the exhaust gas purification catalyst reached 60°C, the introduction of the exhaust gas at 500°C into the exhaust gas purification catalyst was started, and the HC purification rate was measured. The number of seconds until the HC purification rate reached 50% was then measured and used as an index for the warm-up characteristic evaluation test. The results were shown in the graphs of Figs. 7 to 9. The results of Comparative Examples 1 to 2 and Examples 1 to 2 using the base material 1 are shown in Fig. 7. The results of Comparative Example 3 and Example 3 using the base material 2 are shown in Fig. 8. The results of Comparative Example 4 and Example 4 using the above base material 3 are shown in Fig. 9.

As is clear from these graphs, it was confirmed that regardless of the type of base material, the formation of the catalyst metal direct support portion in the upstream region improves the warm-up characteristics (warm-up performance) and increases the HC purification rate for relatively low temperature exhaust gas. The warm-up characteristics (warm-up performance) of both Examples 1 and 2 were better than those of Comparison Examples 1 and 2, which were constituted by the same base material 1. The HC purification rate was higher in Example 1 than in Example 2. One cause of this can be considered that the amount of Pd supported in the upstream region (in this case, a region of a length which was 30% from the upstream end in the overall length) was higher in Example 1 than in Example 2, so that the HC oxidation efficiency in Example 1 was higher if the warm-up characteristics (warming-up performance) were the same. In the test results shown in Figs. 7 to 9, Pd was the catalyst metal (platinum group metal) provided in the catalyst metal direct support portion, but it is understood from the technical information disclosed herein that the effect of lowering the heat capacity is not limited to Pd, but also applies to other catalyst metals (Rh, Pt, and the like).

## Claims

1. An exhaust gas purification catalyst for purifying exhaust gas exhausted from an internal combustion engine, the exhaust gas purification catalyst comprising:
a base material disposed in an exhaust pipe of the internal combustion engine and having an exhaust gas passage extending from an upstream end from which the exhaust gas is introduced to a downstream end from which the exhaust gas is exhausted; and
a catalyst support portion containing a catalyst metal that functions as a catalyst capable of for oxidizing or reducing at least one exhaust gas component and provided in the exhaust gas passage of the base material, wherein
the catalyst support portion includes:
a catalyst coat portion having a carrier made of inorganic compound particles and at least one catalyst metal in a supported state on the carrier; and
a catalyst metal direct support portion that does not contain the carrier and has at least one catalyst metal in a directly supported state on the base material,
the catalyst metal direct support portion is provided at least in an upstream region of a predetermined length from the upstream end in the exhaust gas passage, and
the catalyst coat portion is not provided in the upstream region of the predetermined length from the upstream end in the exhaust gas passage and is provided only in a downstream region downstream of the upstream region.

2. The exhaust gas purification catalyst according to claim 1, wherein
the catalyst metal direct support portion is provided in a region of a length that is at least 30% or more of a total length of the exhaust gas passage from the upstream end.

3. The exhaust gas purification catalyst according to claim 1 or 2, wherein
the catalyst metal direct support portion is provided only in the upstream region of the predetermined length from the upstream end and is not provided in the downstream region which is downstream of the upstream region and in which the catalyst coat portion is not provided.

4. The exhaust gas purification catalyst according to claim 1 or 2, wherein
the catalyst metal direct support portion is provided also in at least a partial area of the downstream region in which the catalyst coat portion is provided.

5. The exhaust gas purification catalyst according to any one of claims 1 to 4, wherein
the catalyst metal direct support portion contains, as a catalyst metal, palladium and/or platinum, and the catalyst coat portion contains, as the catalyst metal, rhodium (Rh).

6. The exhaust gas purification catalyst according to any one of claim 1 to 5, wherein
the base material is made of a material that is heatable by energization, and
the exhaust gas purification catalyst is constituted as an electrically heated catalyst.
